# EUROPEAN PATENT APPLICATION

(11) **EP 4 561 186 A1**
(43) Date of publication of application: **28.05.2025**
(21) Application number: 23843316.3
(22) Date of filing: 18.07.2023
(51) Int. Cl.: H04W 48/18, H04W 76/12, H04W 8/22, H04W 28/02, H04W 76/18, H04W 88/14

(54) **METHOD AND APPARATUS FOR PERFORMING NETWORK SLICE RE-MAPPING IN WIRELESS COMMUNICATION SYSTEM**

(30) Priority: 19.07.2022 US 202263390298 P
(71) Applicant: LG Electronics Inc., Yeongdeungpo-gu Seoul 07336 (KR)
(72) Inventor: CHOE, Hyunjung, Seoul 06772 (KR)
(74) Representative: Plasseraud IP
(86) International application number: PCT/KR2023/010258
(87) International publication number: WO 2024/019470

(57) **Abstract**

An access management function (AMF) operation method in a wireless communication system, may comprise receiving a first protocol data unit (PDU) session establishment request based on a first network slice from a terminal, performing network slice re-mapping related to a PDU session, transmitting a first PDU session establishment response to the terminal based on the first PDU session establishment request, the first PDU session establishment response including second network slice related information based on the network slice re-mapping, receiving a second PDU session establishment request from the terminal based on the first network slice or the second network slice, and transmitting a second PDU session establishment response to the terminal based on the second PDU session establishment request.

## Description

### Technical Field

The following description relates to a wireless communication system, and to a method and device for performing network slice re-mapping. Specifically, it relates to a method of forwarding related information when adding or replacing a network slice associated with a PDU (protocol data unit).

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for performing network slice re-mapping in a wireless communication system.

The present disclosure relates to a method and device for maintaining service continuity by using another network slice when an existing network slice cannot be used due to network congestion in a wireless communication system.

The present disclosure relates to a method and device for providing timer information for an existing network slice together with slice re-mapping information when performing network slice re-mapping in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, an access management function (AMF) operation method in a wireless communication system, may comprise receiving a first protocol data unit (PDU) session establishment request based on a first network slice from a terminal, performing network slice re-mapping related to a PDU session, transmitting a first PDU session establishment response to the terminal based on the first PDU session establishment request, the first PDU session establishment response including second network slice related information based on the network slice re-mapping, receiving a second PDU session establishment request from the terminal based on the first network slice or the second network slice, and transmitting a second PDU session establishment response to the terminal based on the second PDU session establishment request.

In addition, as an example of the present disclosure, an AMF operating in a wireless communication system may comprise at least one transceiver, at least one processor and at least one memory operably connected to the at least one processor and configured to store instructions that, when executed, cause the at least one processor to perform a specific operation. The specific operation may control the at least one transceiver to receive a first protocol data unit (PDU) session establishment request based on a first network slice from a terminal, perform network slice re-mapping related to a PDU session, control the at least one transceiver to transmit a first PDU session establishment response to the terminal based on the first PDU session establishment request, the first PDU session establishment response including second network slice related information based on the network slice re-mapping, control the at least one transceiver to receive a second PDU session establishment request from the terminal based on the first network slice or the second network slice from the terminal, and control the at least one transceiver to transmit a second PDU session establishment response to the terminal based on the second PDU session establishment request.

In addition, as an example of the present disclosure, a terminal operation method in wireless communication system may comprise transmitting a first PDU session establishment request based on a first network slice to an AMF, receiving a first PDU session establishment response from the AMF based on the first PDU session establishment request, the first PDU session establishment response including second network slice related information based on network slice re-mapping, transmitting a second PDU session establishment request to the AMF based on the first network slice or the second network slice, and receiving a second PDU session establishment response from the AMF based on the second PDU session establishment request.

In addition, as an example of the present disclosure, a terminal operating in a wireless communication system may comprise at least one transceiver, at least one processor, and at least one memory operably connected to the at least one processor and configured to store instructions that, when executed, cause the at least one processor to perform a specific operation. The specific operation may control the at least one transceiver to transmit a first PDU session establishment request based on a first network slice to an AMF, control the at least one transceiver to receive a first PDU session establishment response from the AMF based on the first PDU session establishment request, the first PDU session establishment response including second network slice related information based on network slice re-mapping, control the at least one transceiver to transmit a second PDU session establishment request to the AMF based on the first network slice or the second network slice, and control the at least one transceiver to receive a second PDU session establishment response from the AMF based on the second PDU session establishment request.

In addition, as an example of the present disclosure, a device may comprise at least one memory and at least one processor functionally connected to the at least one memory, wherein the at least one processor controls the device to receive a first protocol data unit (PDU) session establishment request based on a first network slice from another device, perform network slice re-mapping related to a PDU session, transmit a first PDU session establishment response to another device based on the first PDU session establishment request, the first PDU session establishment response including second network slice related information based on the network slice re-mapping, receive a second PDU session establishment request from another device based on the first network slice or the second network slice; and control the at least one transceiver to transmit a second PDU session establishment response to another device based on the second PDU session establishment request.

In addition, as an example of the present disclosure, a non-transitory computer-readable medium storing at least one instruction may comprise the at least one instruction executable by a processor. The at least one instruction may control a device to receive a first protocol data unit (PDU) session establishment request based on a first network slice from another device, perform network slice re-mapping related to a PDU session, transmit a first PDU session establishment response to another device based on the first PDU session establishment request, the first PDU session establishment response including second network slice related information based on the network slice re-mapping, receive a second PDU session establishment request from another device based on the first network slice or the second network slice, and control the at least one transceiver to transmit a second PDU session establishment response to another device based on the second PDU session establishment request.

In addition, the following matters may be applied commonly.

As an example of the present disclosure, obtaining terminal capability information from the terminal may be further included, and the terminal capability information may indicate whether the terminal supports the network slice re-mapping.

In addition, as an example of the present disclosure, the first PDU session request may include first single-network slice selection assistance information (NSSAI) based on the first network slice, and the second PDU session request may include the first S-NSSAI or second S-NSSAI based on a second network slice.

In addition, as an example of the present disclosure, the network slice re-mapping may be performed based on the first network slice of the PDU session being not available after receiving the first PDU session establishment request, and the first PDU session establishment response may include the second network slice related information including the second S-NSSAI based on the network slice re-mapping.

In addition, as an example of the present disclosure, the second network slice related information may include timer information, and the timer information may indicate a time interval during which the first network slice is invalid or a time interval during which the second network slice is valid.

In addition, as an example of the present disclosure, the AMF may establish the PDU session with the terminal based on the first PDU session establishment response, transmit a PDU session release command message to the terminal, receive a PDU session release complete message from the terminal to release the PDU session with the terminal, and then receive the second PDU session establishment request message after releasing the PDU session.

In addition, as an example of the present disclosure, the terminal may operate a validity timer based on the timer information, the second PDU session establishment request message may include the second NSSAI, based on the second PDU session establishment request message being transmitted to the AMF before the validity timer expires, and the second PDU session establishment request message may include the first NSSAI, based on the second PDU session establishment request message being transmitted to the AMF after the validity timer expires.

In addition, as an example of the present disclosure, the AMF may determine that the first network slice of the PDU session is not available, based on a network congestion control indication related to the first network slice of the PDU session being received after receiving the first PDU session establishment request.

In addition, as an example of the present disclosure, the AMF may transmit a session management (SM) context request or SM context update to a session management function (SMF) based on the AMF performing the network slice re-mapping, a response message may be received based on the SM context request or the SM context update, the SMF may determine that the PDU session is associated with the second network slice, based on a network slice associated with the PDU session being replaced, the SMF may determine that the PDU session is associated with the first network slice and the second network slice, based on a network slice associated with the PDU session being added.

In addition, as an example of the present disclosure, the AMF may receive, from the SMF, information indicating that the network slice associated with the PDU session is replaced from the first network slice to the second network slice or information indicating that the second network slice is added to the network slice associated with the PDU session.

In addition, as an example of the present disclosure, the AMF may further receive time interval information from the SMF, and the time interval information may indicate a time interval during which the first network slice is invalid or a time interval during which the second network slice is valid.

In addition, as an example of the present disclosure, based on there being no network slice associated with the PDU session, the AMF may receive a PDU session establishment reject message including a cause value indicating network slice re-mapping failure from the SMF.

In addition, as an example of the present disclosure, the PDU session establishment reject message may further include information about a time interval during which the network slice is invalid.

### Advantageous Effects

The present disclosure can provide a method of performing network slice re-mapping in a wireless communication system.

The present disclosure can provide a method of maintaining service continuity by using another network slice when an existing network slice cannot be used due to network congestion in a wireless communication system.

The present disclosure provides timer information of an existing network slice together with slice re-mapping information when performing network slice re-mapping in a wireless communication system, so that a slice re-mapping operation can be performed or a return to an existing network slice can be performed without an additional procedure.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a diagram illustrating a case where service continuity is not guaranteed due to a lack of slice resources applicable to the present disclosure.
FIG. 6 is a diagram illustrating a method of performing slice re-mapping based on a handover request applicable to the present disclosure.
FIG. 7 is a diagram illustrating a method of performing a handover considering additional S-NSSAI applicable to the present disclosure.
FIG. 8 is a diagram illustrating a network slice re-mapping operation applicable to the present disclosure.
FIG. 9 is a diagram illustrating a terminal operation supporting a network slice applicable to the present disclosure.
FIG. 10 is a diagram illustrating a terminal operation supporting a network slice applicable to the present disclosure.
FIG. 11 is a flowchart illustrating an AMF operation method applicable to the present disclosure.
FIG. 12 is a flowchart illustrating a terminal operation method applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

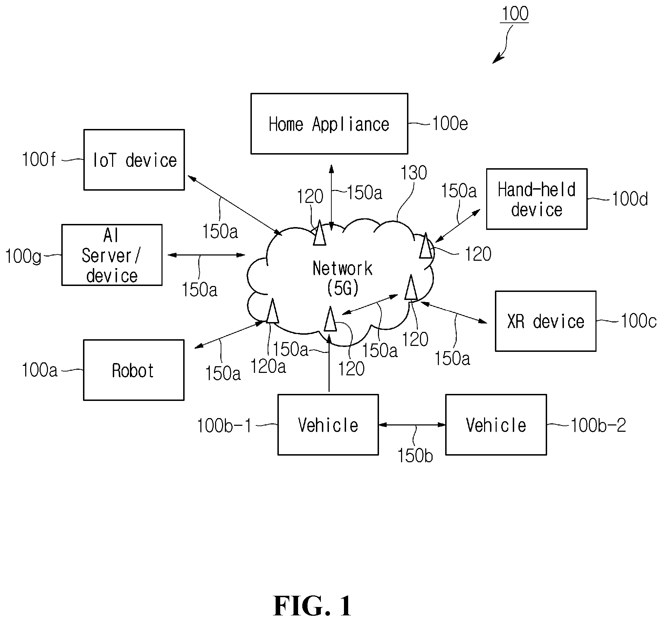

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

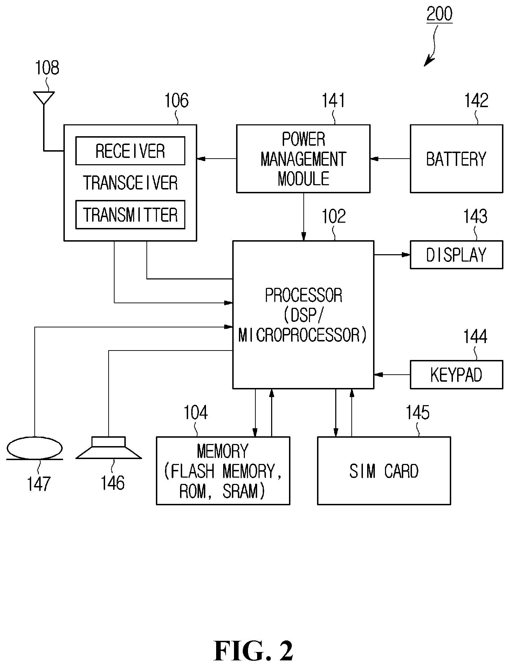

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

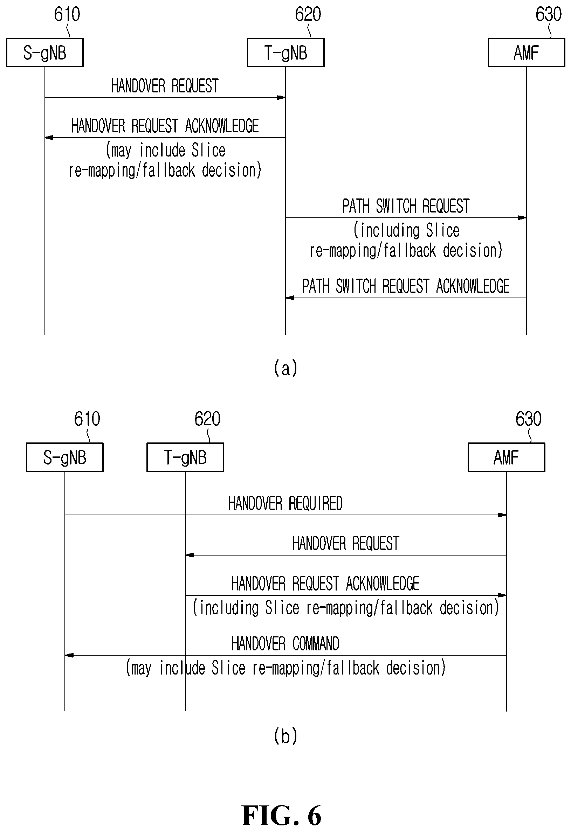

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

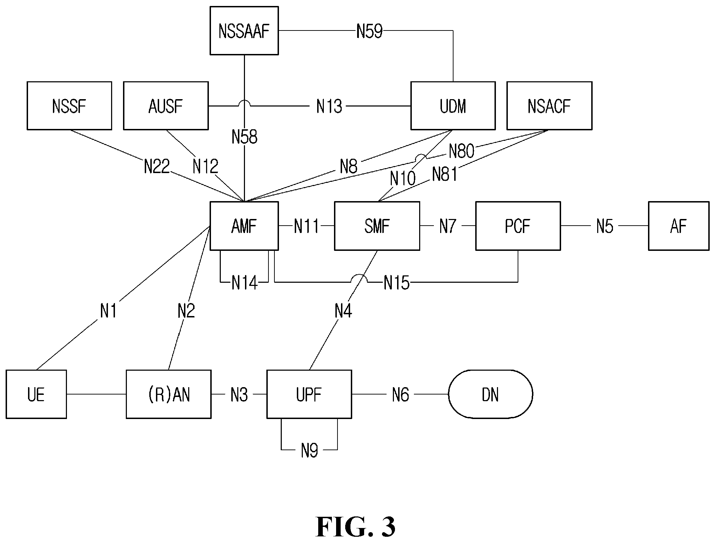

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point betweenAMF and SMF. N12 represents a reference point between AMF and AUSF. N13 represents a reference point between UDM and AUSF. N14 represents a reference point betweenAMFs. N15 represents a reference point between PCF and AMF in a non-roaming scenario and a reference point between AMF and PCF of a visited network in a roaming scenario. N16 represents a reference point between SMFs. N22 represents a reference point betweenAMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

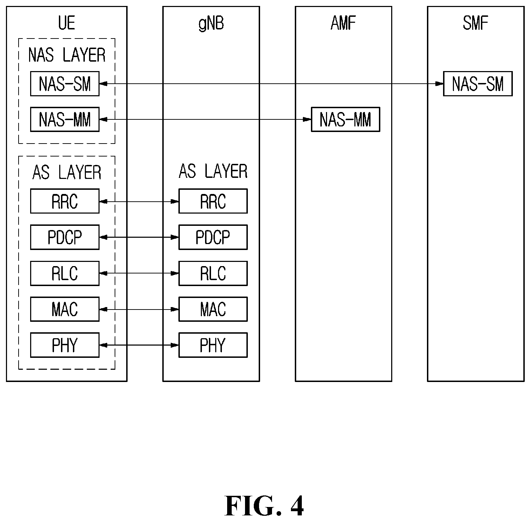

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

For example, when a terminal requests a network slice and a network slice or an associated network slice instance is overloaded or unsupported, the RAN node or core network may re-map the requested network slice to another network slice.

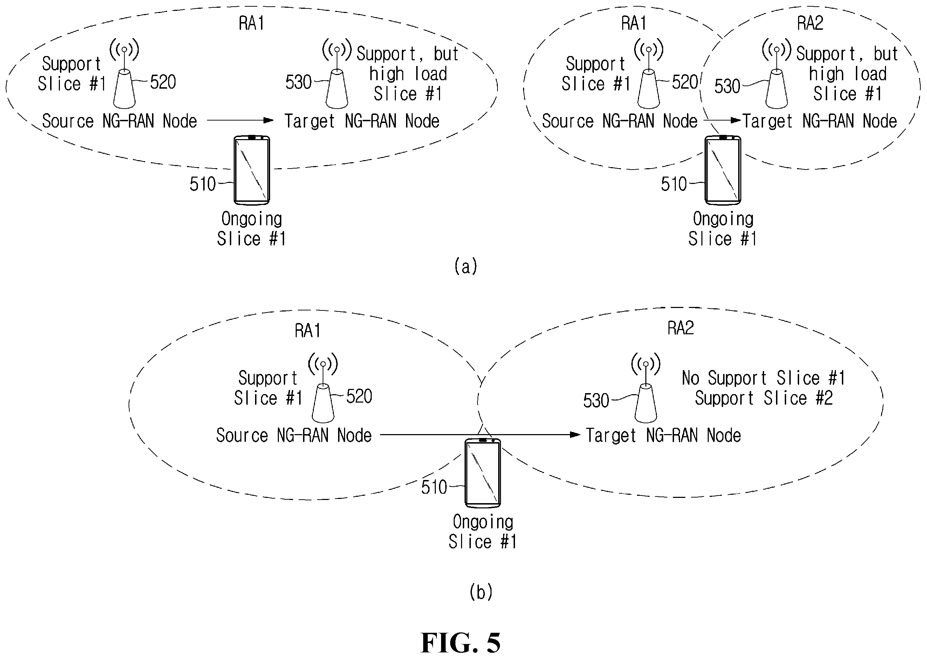

As a specific example, FIG. 5 is a diagram illustrating a case where service continuity is not guaranteed due to a lack of slice resources applicable to the present disclosure. Referring to FIG. 5(a), a slice used by a terminal 510 may be supported by both a source RAN node 520 and a target RAN node 530. A case where the terminal 510 hands over from the source RAN node 520 to the target RAN node 530 may be considered. Here, although the slice used by the terminal 510 is supported by the target RAN node 530, the target RAN node 530 may not be able to use the slice due to overload. Accordingly, the terminal 510 may not succeed in a slice-based handover to the target RAN node 530, and thus, service continuity may not be guaranteed.

As another example, referring to FIG. 5(b), the slice used by the terminal 510 may be supported by the source RAN node 520 but not supported by the target RAN node 530. A case where the terminal 510 performs a handover from the source RAN node 520 to the target RAN node 530 may be considered. Here, since the slice used by the terminal 510 is not supported by the target RAN node 530, the terminal 510 may not receive a service from the target RAN node 530 based on the corresponding slice. Accordingly, the terminal 510 may not succeed in a slice-based handover to the target RAN node 530, and thus, service continuity may not be guaranteed.

As another example, when the source RAN node 520 lacks slice resources or does not support the slice in relation to the slice used by the terminal 510, the terminal 510 may maintain service continuity by handing over to another target RAN node 530 that has sufficient slice resources or supports the slice, but may not be limited thereto.

In the above-described situation, service continuity may not be maintained based on lack of slice resources or whether the slice is supported, and a solution for this may be required. Hereinafter, network slice re-mapping for service continuity will be described.

For example, the target RAN node may determine slice re-mapping at the time when the terminal performs handover. The target RAN node may check the re-mapping policy for the corresponding PDU session and perform slice re-mapping based on this. For example, the slice re-mapping policy may be determined based on at least one of operations, administration and maintenance (OAM) or core network (CN), but may not be limited thereto.

FIG. 6 is a diagram illustrating a method of performing slice re-mapping based on a handover request applicable to the present disclosure.

Referring to FIG. 6(a), an S-gNB (source-gNB) 610 may transmit a handover request to a T-gNB (target-gNB) 620. Here, the T-gNB 620 may reject the slice currently being used by the UE based on the slice re-mapping policy and determine the slice re-mapping and fallback operation. Thereafter, the T-gNB 620 may transmit a response message including the slice re-mapping and fallback information to the S-gNB 610. In addition, the T-gNB 620 may transmit a path switch request including the slice re-mapping and fallback information to an AMF 630 and receive a response thereto.

As another example, referring to FIG. 6(b), the S-gNB 610 may transmit a handover request to the AMF 630. Here, the AMF 630 may transmit the handover request of the S-gNB 610 to the T-gNB 620. The T-gNB 620 may reject the slice currently being used by the UE based on the slice re-mapping policy and determine the slice re-mapping and fallback operation. The T-gNB 620 may transmit a response message including the slice re-mapping and fallback information to the AMF 630, and the AMF 630 may transmit a command message including the slice re-mapping and fallback information to the S-gNB 610.

As another example, to support network slice service continuity, a PDU session may be associated with multiple S-NSSAI (single network slice selection assistance information). S-NSSAI may be composed of SST (slice/service type) and SD (slice differentiator) as identifiers for identifying network slices.

If a network function (NF) (e.g., AMF, SMF, UPF, etc.) of a network slice instance supports multiple S-NSSAIs, the NF may partition and use resources according to the S-NSSAIs. For example, even if resources of a specific S-NSSAI become congested, resources of other S-NSSAIs may not become congested. Considering the above-described situation, if a specific S-NSSAI is congested, the network may provide service continuity by connecting an additional S-NSSAI to a PDU session. For example, one S-NSSAI resource allocated to an SMF and/or UPF may be shared with another S-NSSAI if the other S-NSSAI is congested.

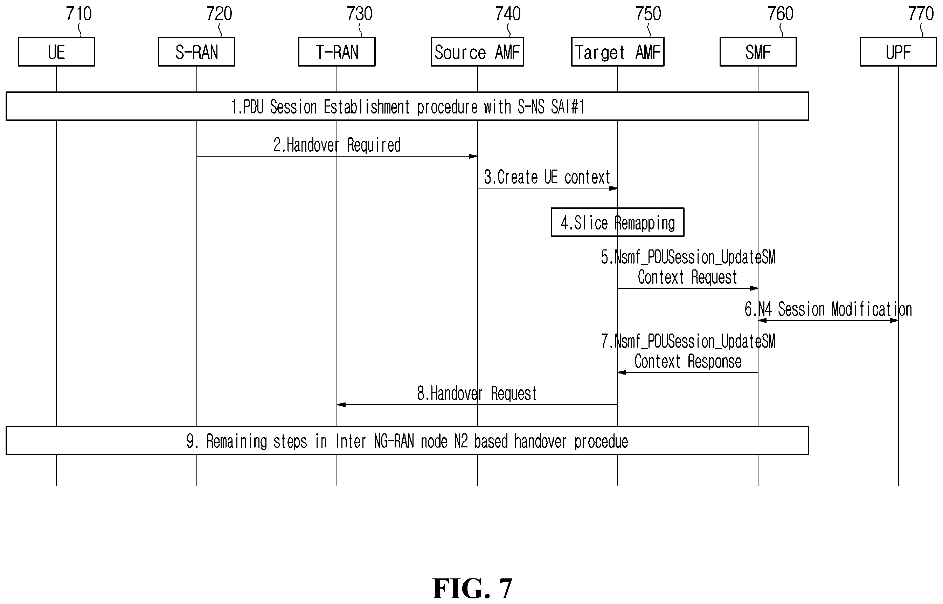

FIG. 7 is a diagram illustrating a method of performing a handover considering additional S-NSSAI applicable to the present disclosure. Referring to FIG. 7, a terminal 710 may establish a PDU session based on a source RAN (S-RAN) 720 and S-NSSAI#1. Thereafter, the S-RAN 720 may perform terminal measurement, determine a handover to a target RAN (T-RAN) 730 based on this, and transmit a handover request message to a source AMF 740. As an example, the handover request message may include, but is not limited to, a container forwarded from a T-RAN node information source to a target, an SM N2 information list, and a PDU session ID.

Thereafter, the source AMF 740 may select a targetAMF 750 and create a UE context in the targetAMF 750. For example, the targetAMF 750 may be instructed by the core network that S-NSSAI#1 is congested. Here, the targetAMF 750 needs to maintain service continuity of the terminal, and for this purpose, may check whether S-NSSAI#2 is supported by the T-RAN 730 with another S-NSSAI. If S-NSSAI#2 is supported by the T-RAN 730, the target AMF 750 may decide to additionally associate S-NSSAI#2 with the PDU session. For this, the AMF 750 may transmit a request to create or update an SM context for the PDU session (e.g., Nsmf_PDUSession_CreateSMContext) to the SMF 760. For example, a request to create or update an SM context may include, but is not limited to, a PDU session ID, S-NSSAI#2, and N2 SM information. If S-NSSAI#2 is added as an associated network slice for the PDU session, the SMF 760 may determine that the PDU session is associated with S-NSSAI#1 and S-NSSAI#2. Thereafter, the SMF 760 may forward a session establishment message to the UPF 770 to update the N4 session information in the UPF 770. Thereafter, the SMF 760 may forward an SM context or update response message for the PDU session to the target AMF 750. For example, if there is no available network slice or slice instance for the PDU session, the SMF 760 may forward a PDU session rejection message to the targetAMF 750 with a cause indicating a slice re-mapping failure. Thereafter, the targetAMF 750 may transmit a handover request to the T-RAN 730, and the handover procedure may be performed.

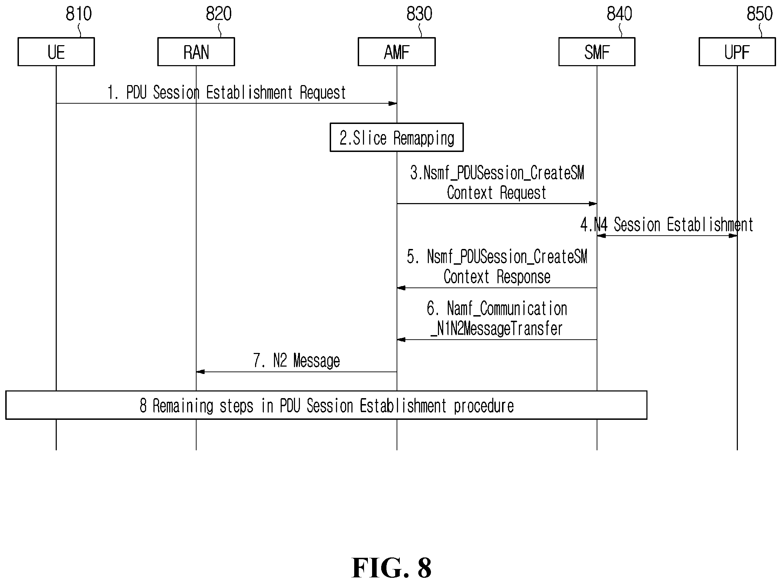

FIG. 8 is a diagram illustrating a network slice re-mapping operation applicable to the present disclosure. Referring to FIG. 8, a terminal 810 may forward a PDU (protocol data unit) session establishment request to an AMF 830. Here, the PDU session establishment request may include S-NSSAI#1. As an example, the network may allow a PDU session request of a terminal including S-NSSAI#1 to provide service continuity even though S-NSSAI#1 is not available. S-NSSAI#1 may be unavailable based on congestion control in a core network, but may not be limited thereto. The AMF 830 may determine that the requested PDU session is associated with an additional S-NNSAI#2. To this end, the AMF 830 may transmit a request to create or update SM context for PDU session (e.g., Nsmf_PDUSession_CreateSMContext) to the SMF 840 based on slice re-mapping. For example, the request to create or update SM context may include, but is not limited to, PDU session ID, S-NSSAI#2, and N2 SM information. If S-NSSAI#2 is added as an associated network slice for PDU session, the SMF 840 may determine that PDU session is associated with S-NSSAI#1 and S-NSSAI#2. Thereafter, the SMF 840 may forward a session establishment message to the UPF 850 to update N4 session information in the UPF 850. Thereafter, the SMF 840 may transmit an N1N2 message to the AMF 830. For example, if S-NSSAI#2 is added as a network slice to establish the PDU session, the S-NSSAI#2 related information may indicate that S-NSSAI#2 is added as a network slice to establish the PDU session.

As another example, if S-NSSAI#2 is replaced with a network slice to establish the PDU session, the S-NSSAI#2 related information may indicate that S-NSSAI#2 is replaced with a network slice to establish the PDU session.

Additionally, the N1N2 message may include a PDU session establishment accept indication by S-NSSAI#2. The AMF 830 may forward information indicating that S-NSSAI#2 is used for the PDU session through a DL NAS message.

As another example, a network function (e.g. RAN, AMF, SMF) may maintain slice re-mapping information to consider subsequent PDU session requests from the UE for S-NSSAI#1 even if S-NSSAI#1 is not available for a long period of time. For example, in case of a multiple access (MA) PDU session, the UE may request a PDU session establishment request that includes an S-NSSAI that is included in the allowed NSSAI of another access.

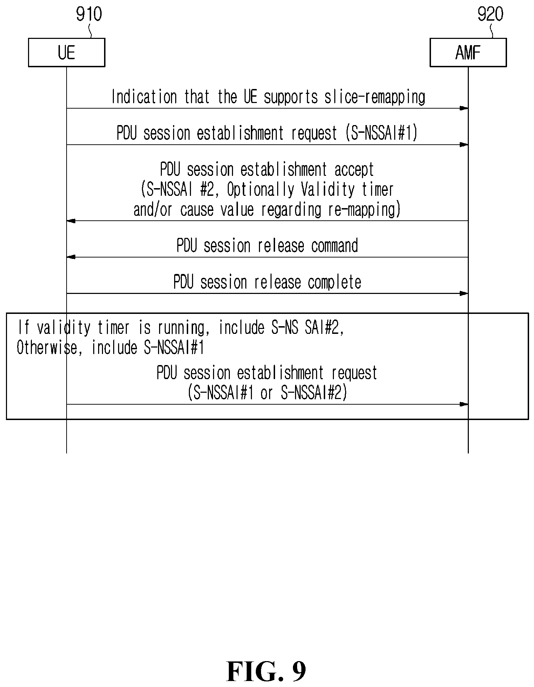

Also, as an example, a terminal operation method based on a slice re-mapping procedure may be required. FIG. 9 is a diagram illustrating a terminal operation supporting a network slice applicable to the present disclosure. Referring to FIG. 9, a terminal 910 may transmit indication information supporting network slice re-mapping to an AMF 920. Thereafter, the terminal 910 may forward a PDU session establishment request including S-NSSAI#1 to the AMF 920. Here, the AMF 920 may determine that the requested PDU session is associated with additional S-NNSAI#2, and may perform the operation of FIG. 8. Thereafter, the AMF 920 may transmit a PDU session establishment accept message to the terminal 910. As an example, the PDU session establishment accept message may include S-NSSAI#2 based on network slice re-mapping. Another PDU session establishment accept message may include at least one of a validity timer or a cause value associated with the re-mapping.

Thereafter, if the terminal 910 obtains a PDU session release command from the AMF 920, the terminal 910 may release the PDU session and forward a PDU session release complete message to the AMF 920. Here, if the terminal 910 wants to re-establish the PDU session, the terminal 910 may transmit a PDU session establishment request message including S-NSSAI#1 or S-NSSAI#2 to the AMF 920. That is, the terminal 910 may transmit a PDU session establishment request message including network slice identification information before slice re-mapping or a PDU session establishment request message including network slice identification information after slice re-mapping to the AMF 920.

As a specific example, if the validity timer included in the PDU session establishment accept message is running, the terminal may transmit a PDU session establishment request message including S-NSSAI#2 to the AMF 920. That is, the terminal may transmit a PDU session establishment request message including network slice identification information after slice re-mapping to the AMF 920. On the other hand, if the validity timer has expired, the terminal may transmit a PDU session establishment request message including S-NSSAI#1 to the AMF 920. That is, the terminal may transmit a PDU session establishment request message including network slice identification information before slice re-mapping to the AMF 920.

The validity timer included in the PDU session establishment accept message may indicate a time during which the associated network slice is valid based on network slice re-mapping, and within that time, the terminal 910 may use the associated network slice based on slice re-mapping.

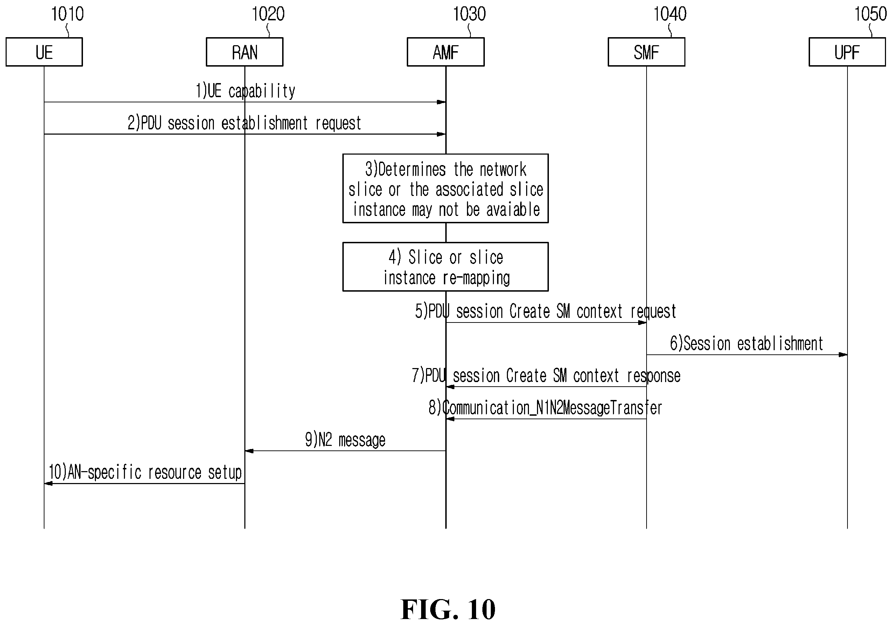

As a more specific example, FIG. 10 is a diagram illustrating a terminal operation supporting a network slice applicable to the present disclosure. Referring to FIG. 10, a terminal 1010 may transmit terminal capability information to an AMF 1020. Here, the terminal capability information may include information indicating whether the terminal supports network slice re-mapping. As an example, the network slice re-mapping procedure may be an AS-based capability or a NAS-based capability. As another example, the network slice re-mapping procedure may be a capability based on bothAS and NAS layers, and is not limited to a specific embodiment. Thereafter, the terminal 1010 may check whether the requested S-NSSAI is available in the current access network or another access network. In addition, the terminal 1010 may forward a PDU session establishment request including S-NSSAI#1 to the AMF 1030. Here, the AMF 1030 may determine that the network slice or the associated slice instance is not available. For example, the AMF 1030 may receive an indication that the requested network slice (S-NSSAI#1) or the associated network slice instance is not available based on congestion control of the network. The AMF 1030 may determine that the requested S-NSSAI#1 for the PDU session from the terminal 1010 is not available based on the indication. Additionally, the AMF 1030 may determine that the requested S-NSSAI#1 is not available for a specific period of time based on information stored in the AMF or information received from other network functions.

Here, the AMF 1030 may check whether S-NSSAI#2 is supported in the network. Alternatively, the AMF 1030 may check the shared network slice information through other network slices to determine another network slice available for S-NSSAI#1. If the network slice associated with S-NSSAI#1 is unavailable and another network slice instance is available, the AMF 1030 may update additional network slice instance information and perform a PDU session establishment procedure. For example, a shared slice instance of S-NSSAI#2 as another network slice may be available for S-NSSAI#1.

Here, if S-NSSAI#2 is supportable in the RAN node 1020, the AMF 1030 may determine an additional S-NSSAI#2 to be associated with the PDU session. Thereafter, the AMF 1030 may transmit a request to create or update an SM context for the PDU session (e.g., Nsmf_PDUSession_CreateSMContext) to the SMF 1040. As an example, the request to create or update the SM context may include S-NSSAI#2 as additional network slice information or alternative network slice information of S-NSSAI#1. In addition, as an example, the request to create or update the SM context may further include information on a time interval during which the S-NSSAI#1 is invalid. That is, the AMF 1030 may forward information on a time interval during which the S-NSSAI#1 is invalid to the SMF 1040.

If the associated network slice for a PDU session is replaced, the SMF 1040 may determine that the PDU session is associated with S-NSSAI#2.

As another example, if S-NSSAI#2 is added as an associated network slice for the PDU session, the SMF 1040 may determine that the PDU session is associated with S-NSSAI#1 and S-NSSAI#2. Then, SMF 1040 may forward a session establishment message to a UPF 1050 to update N4 session information in the UPF 1050. Then, the SMF 1040 may forward an SM context or update response message for the PDU session to the AMF 1030.

Here, for example, if there is no network slice or slice instance available for the PDU session, the SMF 1040 may forward a PDU session reject message to the AMF 1030 along with a cause indicating a slice re-mapping failure as an SM context or update response message for the PDU session. As another example, if there is no network slice or slice instance available for the PDU session, the SMF 1040 may determine an invalid time interval of the S-NSSAI#1 and include the corresponding time interval information in the PDU session reject message and instruct the AMF 1030.

After the SMF 1040 transmits the SM context or update response message for the PDU session to the AMF 1030, the SMF 1040 may transmit an N1N2 message to the AMF 1030. Here, the N1N2 message may include S-NSSAI#2 information. For example, if S-NSSAI#2 is added as a network slice to establish the PDU session, the N1N2 message may include S-NSSAI#2 information indicating that S-NSSAI#2 is added as a network slice to establish the PDU session.

As another example, if S-NSSAI#2 is replaced with a network slice to establish the PDU session, the N1N2 message may include S-NSSAI#2 information indicating that S-NSSAI#2 is replaced with a network slice to establish the PDU session.

As another example, the SMF 1040 may transmit invalid time interval information of S-NSSAI#1 or valid time interval information of S-NSSAI#2 to the AMF 1030. Here, the N1N2 message may include a PDU session establishment accept message by S-NSSAI#2.

For example, the PDU session establishment accept message may include invalid time interval information of S-NSSAI#1, and the terminal may not perform a PDU session request using S-NSSAI#1 until the invalid time interval of S-NSSAI#1 expires. As a specific example, the invalid time interval information of NSSAI#1 may be a backoff timer of S-NSSAI#1. That is, the terminal may not perform a PDU session request until the backoff timer of S-NSSAI#1 expires.

For example, the PDU session establishment accept message may be transmitted from the SMF 1040 to the terminal 1010 based on the slice re-mapping procedure. For example, the PDU session establishment accept message may include a backoff timer value as information on an invalid time interval of S-NSSAI#1 or a time interval during which a PDU session should be requested through S-NSSAI#2 instead of S-NSSAI#1, as shown in Table 1 below. However, Table 1 is only one example and may not be limited thereto.

**[Table 1]**

| **IEI** | **Information Element** | **Type/Reference** | **Presence** | **Format** | **Length** |
|---|---|---|---|---|---|
| | **Extended protocol discriminator** | **Extended protocol discriminator** | **M** | **v** | **1** |
| | **PDU session ID** | **PDU session identity** | **M** | **v** | **1** |
| | **PTI** | **Procedure transaction identity** | **M** | **v** | **1** |
| | **PDU SESSION ESTABLISHMENT ACCEPT message identity** | **Message type** | **M** | **v** | **1** |
| | **Selected PDU session type** | **PDU session type** | **M** | **v** | **1/2** |
| | **Selected SSC mode** | **SSC mode** | **M** | **v** | **1/2** |
| | **Authorized QoS rules** | **QoS rules** | **M** | **LV-E** | **6-65538** |
| | **Session AMBR** | **Session-AMBR** | **M** | **LV** | **7** |
| **59** | **5GSM cause** | **5GSM cause** | **O** | **TV** | **2** |
| **29** | **PDU address** | **PDU address** | **O** | **TLV** | **7-31** |
| **56** | **RQ timer value** | **GPRS timer** | **O** | **TV** | **2** |
| **22** | **S-NSSAI** | **S-NSSAI** | **O** | **TLV** | **3-10** |
| **8-** | **Always-on PDU session indication** | **Always-on PDU session Indication** | **O** | **TV** | **1** |
| **75** | **Mapped EPS bearer contexts** | **Mapped EPS bearer contexts** | **O** | **TLV-E** | **7-65538** |
| **78** | **EAP message** | **EAP message** | **O** | **TLV-E** | **7-1503** |
| **79** | **Authorized QoS flow descriptions** | **QoS flow descriptions** | **O** | **TLV-E** | **6-65538** |
| **7B** | **Extended protocol configuration options** | **Extended protocol configuration options** | **O** | **TLV-E** | **4-65538** |
| **25** | **DNN** | **DNN** | **O** | **TLV** | **3-102** |
| **17** | **5GSM network feature support** | **5GSM network feature support** | **O** | **TLV** | **3-15** |
| **18** | **Serving PLMN rate control** | **Serving PLMN rate control** | **O** | **TLV** | **4** |
| **77** | **ATSSS container** | **ATSSS container** | **O** | **TLV-E** | **3-65538** |
| **C-** | **Control plane only indication** | **Control plane only indication** | **O** | **TV** | **1** |
| **66** | **IP header compression configuration** | **IP header compression configuration** | **O** | **TLV** | **5-257** |
| **1F** | **Ethernet header compression configuration** | **Ethernet header compression configuration** | **O** | **TLV** | **3** |
| **72** | **Service-level-AA container** | **Service-level-AA container** | **O** | **TLV-E** | **6-n** |
| **71** | **Received MBS container** | **Received MBS container** | **O** | **TLV-E** | **9-65538** |
| **▪** | **▪** | **▪** | **▪** | **▪** | **▪** |
| **▪** | **▪** | **▪** | **▪** | **▪** | **▪** |
| **▪** | **▪** | **▪** | **▪** | **▪** | **▪** |
| **xx** | **Re-mapping back-off timer value** | **-** | **-** | **-** | **-** |

The AMF 1030 may forward information indicating that S-NSSAI#2 is used for the PDU session through a DL NAS message. For example, the message may include, but is not limited to, invalid time interval information of S-NSSAI# 1 or valid time interval information of S-NSSAI#2. As another example, the DL NAS message may include a backoff timer value as invalid time interval information of S-NSSAI#1 or time interval information during which a PDU session should be requested through S-NSSAI#2 instead of S-NSSAI#1, as shown in Table 2 below. However, Table 2 is only an example and may not be limited thereto.

**[Table 2]**

| **IEI** | **Information Element** | **Type/Reference** | **Presence** | **Format** | **Length** |
|---|---|---|---|---|---|
| | **Extended protocol discriminator** | **Extended protocol discriminator** | **M** | **v** | **1** |
| | **Security header type** | **Security header type** | **M** | **v** | **1/2** |
| | **Spare half octet** | **Spare half octet** | **M** | **v** | **1/2** |
| | **DL NAS TRANSPORT message Identity** | **Message type** | **M** | **v** | **1** |
| | **Payload container type** | **Payload container type** | **M** | **v** | **1/2** |
| | **Spare half octet** | **Spare half octet** | **M** | **v** | **1/2** |
| | **Payload container** | **Payload container** | **M** | **LV-E** | **3-65537** |
| **12** | **PDU session ID** | **PDU session identity 2** | **C** | **TV** | **2** |
| **24** | **Additional information** | **Additional information** | **O** | **TLV** | **3-n** |
| **58** | **5GMM cause** | **5GMM cause** | **O** | **TV** | **2** |
| **37** | **Back-off timer value** | **GPRS timer 3** | **O** | **TLV** | **3** |
| **3A** | **Lower bound timer value** | **GPRS timer 3** | **O** | **TLV** | **3** |
| **▪** | **▪** | **▪** | | | |
| | **▪** | | | | **▪** |
| **▪** | | **▪** | **▪** | | |
| **xx** | **Re-mapping back-off timer value** | **-** | **-** | **-** | **-** |

As another example, a PDU session establishment reject message may be piggybacked onto a DL NAS message and forwarded to the terminal along with a rejection reason. Here, the rejection reason may indicate, but is not limited to, a re-mapping failure of S-NSSAI#1.

Thereafter, the AMF 1030 may transmit an N2 PDU session message containing N2 SM information to the RAN node 1020. Additionally, the RAN node 1020 may configure AN-specific resource settings.

As described above, when the old S-NSSAI associated with a PDU session is remapped to an alternative S-NSSAI based on network congestion and other causes, the core network may forward timer information together with the slice re-mapping information to the terminal. Here, when the terminal performs a connection request for the PDU session, the terminal may perform the connection request using the alternative S-NSSAI instead of the old S-NSSAI based on the timer information.

That is, after slice re-mapping occurs, the terminal may not need to perform additional operations for slice re-mapping to the core network by receiving slice re-mapping information and using the newly associated S-NSSAI when requesting a PDU session connection. In addition, since the terminal is aware of the validity time of the slice re-mapping configuration, the terminal may perform a PDU session connection request by reusing the existing S-NSSAI without separately receiving recovery information from the core network after the slice re-mapping configuration is terminated.

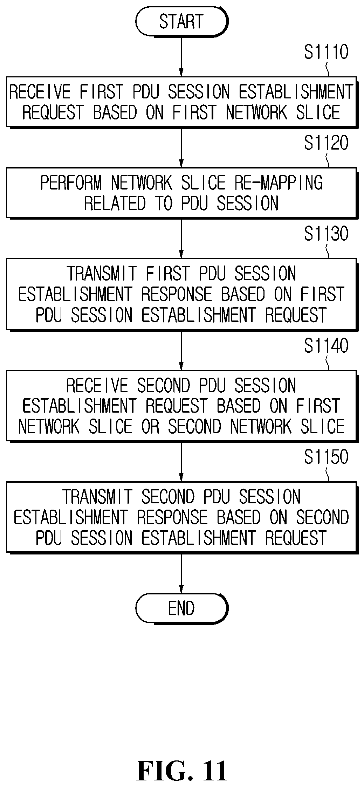

FIG. 11 is a flowchart illustrating an AMF operation method applicable to the present disclosure. Referring to FIG. 11, an AMF may receive a first PDU (protocol data unit) session establishment request based on a first network slice from a terminal. (S1110) Here, the first network slice may correspond to the S-NSSAI#1 described above as an existing network slice, and the first PDU session establishment request may include S-NSSAI#1. The AMF may perform network slice re-mapping after the first PDU session establishment request. (S1120) As an example, the terminal may transmit terminal capability information to the AMF in advance, and the terminal capability information may include information indicating whether the terminal supports network slice re-mapping. In addition, the AMF may perform network slice re-mapping when the first network slice cannot be used based on network congestion control. Thereafter, the AMF may transmit a first PDU session establishment response to the terminal. (S1130) Here, the first PDU session establishment response may include second network slice related information, and the second network slice related information may include S-NSSAI#2. In addition, as an example, the second network slice related information may further include timer information. The timer information may indicate a time interval during which the first network slice is invalid or a time interval during which the second network slice is valid, as described above. Thereafter, the AMF may receive a second PDU session establishment request from the terminal based on the first network slice or the second network slice (S1140), and transmit a second PDU session establishment response based on the second PDU session establishment request. (S1150)

Here, as an example, the AMF may establish a PDU session with the terminal based on a first PDU session establishment response, transmit a PDU session release command message to the terminal, release the PDU session with the terminal by receiving a PDU session release complete message from the terminal, and then receive a second PDU session establishment request message. In addition, the terminal may operate a validity timer based on timer information. For example, if the terminal transmits a second PDU session establishment request message to the AMF before the validity timer expires, the second PDU session establishment request message may include second NSSAI. On the other hand, if the terminal transmits the second PDU session establishment request message to the AMF after the validity timer expires, the second PDU session establishment request message may include first NSSAI.

Additionally, if the AMF receives a network congestion control indication related to the first network slice of the PDU session after receiving the first PDU session establishment request, the AMF may determine that the first network slice of the PDU session is not available, as described above.

In addition, if the AMF performs network slice re-mapping, the AMF may transmit an SM context request or SM context update to the SMF, and receive a response message based on the SM context request or SM context update. For example, if a network slice associated with a PDU session is replaced, the SMF may determine that the PDU session is associated with a second network slice. As another example, if a network slice associated with a PDU session is added, the SMF may determine that the PDU session is associated with a first network slice and a second network slice.

Here, the AMF may receive from the SMF information indicating that the network slice associated with the PDU session is replaced from a first network slice to a second network slice or that the second network slice is added to the network slice associated with the PDU session. Additionally, the AMF may further receive time interval information from the SMF, and the time interval information may indicate a time interval in which the first network slice is invalid or a time interval in which the second network slice is valid.

Additionally, if there is no network slice associated with the PDU session, the AMF may receive a PDU session establishment reject message that includes a cause value indicating a network slice re-mapping failure from the SMF. For example, the PDU session establishment reject message may further include information about the time interval during which the network slice is invalid.

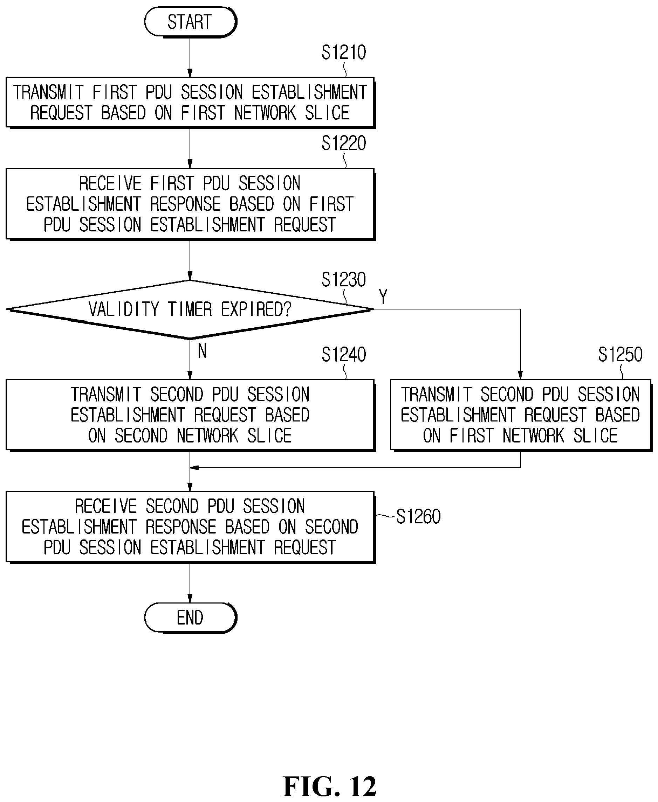

FIG. 12 is a flowchart illustrating a terminal operation method applicable to the present disclosure. Referring to FIG. 12, a terminal may transmit a first PDU session establishment request based on a first network slice to the AMF. (S1210) Here, the first network slice may correspond to the S-NSSAI#1 described above as an existing network slice, and the first PDU session establishment request may include S-NSSAI#1. Here, the AMF may perform network slice re-mapping after the first PDU session establishment request. For example, the terminal may transmit terminal capability information to the AMF in advance, and the terminal capability information may include information indicating whether the terminal supports network slice re-mapping. In addition, the AMF may perform network slice re-mapping when the first network slice cannot be used based on network congestion control. Thereafter, the terminal may receive a first PDU session establishment response from the AMF. (S1220) Here, the first PDU session establishment response may include second network slice related information, and the second network slice related information may include S-NSSAI#2. In addition, as an example, the second network slice related information may further include timer information. The timer information may indicate a time interval during which the first network slice is invalid or a time interval during which the second network slice is valid. For example, the terminal may check whether the validity timer expires based on the timer information. (S1230) If the terminal transmits the second PDU session establishment request before the validity timer expires, the terminal may transmit the second PDU session establishment request based on the second network slice. (S1240) On the other hand, if the terminal transmits the second PDU session establishment request after the validity timer expires, the terminal may transmit the second PDU session establishment request based on the first network slice. (S1250) Thereafter, the terminal may receive the second PDU session establishment response. (S1260)

Here, as an example, the terminal may establish a PDU session with the AMF based on a first PDU session establishment response, receive a PDU session release command message from the AMF, transmit a PDU session release complete message to the AMF to release the PDU session, and then transmit a second PDU session establishment request message.

For example, if the terminal transmits the second PDU session establishment request message to the AMF before the validity timer expires, the second PDU session establishment request message may include the second NSSAI. On the other hand, if the terminal transmits the second PDU session establishment request message to the AMF after the validity timer expires, the second PDU session establishment request message may include the first NSSAI.

In addition, if the AMF performs network slice re-mapping, the AMF may transmit an SM context request or SM context update to the SMF, and receive a response message based on the SM context request or SM context update. For example, if a network slice associated with a PDU session is replaced, the SMF may determine that the PDU session is associated with a second network slice. As another example, if the network slice associated with the PDU session is added, the SMF may determine that the PDU session is associated with the first network slice and the second network slice.

Here, the AMF may receive, from the SMF, information indicating that the network slice associated with the PDU session is replaced from a first network slice to a second network slice or that a second network slice is added to the network slice associated with the PDU session. In addition, the AMF may further receive time interval information from the SMF, and the time interval information may indicate a time interval in which the first network slice is invalid or a time interval in which the second network slice is valid.

Additionally, if there is no network slice associated with the PDU session, the AMF may receive a PDU session establishment reject message that includes a cause value indicating a network slice re-mapping failure from the SMF. For example, the PDU session establishment reject message may further include information about the time interval during which the network slice is invalid.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. An access management function (AMF) operation method in a wireless communication system, comprising:
receiving a first protocol data unit (PDU) session establishment request based on a first network slice from a terminal;
performing network slice re-mapping related to a PDU session;
transmitting a first PDU session establishment response to the terminal based on the first PDU session establishment request, the first PDU session establishment response including second network slice related information based on the network slice re-mapping;
receiving a second PDU session establishment request from the terminal based on the first network slice or the second network slice; and
transmitting a second PDU session establishment response to the terminal based on the second PDU session establishment request.

2. The method of claim 1, further comprising obtaining terminal capability information from the terminal, wherein the terminal capability information indicates whether the terminal supports the network slice re-mapping.

3. The method of claim 2,
wherein the first PDU session request includes first single-network slice selection assistance information (NSSAI) based on the first network slice, and
wherein the second PDU session request includes the first S-NSSAI or second S-NSSAI based on a second network slice.

4. The method of claim 3,
wherein the network slice re-mapping is performed based on the first network slice of the PDU session being not available after receiving the first PDU session establishment request, and
wherein the first PDU session establishment response includes the second network slice related information including the second S-NSSAI based on the network slice re-mapping.

5. The method of claim 4,
wherein the second network slice related information includes timer information, and
wherein the timer information indicates a time interval during which the first network slice is invalid or a time interval during which the second network slice is valid.

6. The method of claim 5, wherein the AMF establishes the PDU session with the terminal based on the first PDU session establishment response, transmits a PDU session release command message to the terminal, receives a PDU session release complete message from the terminal to release the PDU session with the terminal, and receives the second PDU session establishment request message after releasing the PDU session.

7. The method of claim 6,
wherein the terminal operates a validity timer based on the timer information,
wherein the second PDU session establishment request message includes the second NSSAI, based on the second PDU session establishment request message being transmitted to the AMF before the validity timer expires, and
wherein the second PDU session establishment request message includes the first NSSAI, based on the second PDU session establishment request message being transmitted to the AMF after the validity timer expires.

8. The method of claim 3, wherein the AMF determines that the first network slice of the PDU session is not available, based on a network congestion control indication related to the first network slice of the PDU session being received after receiving the first PDU session establishment request.

9. The method of claim 1,
wherein the AMF transmits a session management (SM) context request or SM context update to a session management function (SMF) based on the AMF performing the network slice re-mapping,
wherein a response message is received based on the SM context request or the SM context update,
wherein the SMF determines that the PDU session is associated with the second network slice, based on a network slice associated with the PDU session being replaced,
wherein the SMF determines that the PDU session is associated with the first network slice and the second network slice, based on a network slice associated with the PDU session being added.

10. The method of claim 9, wherein the AMF receives, from the SMF, information indicating that the network slice associated with the PDU session is replaced from the first network slice to the second network slice or information indicating that the second network slice is added to the network slice associated with the PDU session.

11. The method of claim 10, wherein the AMF further receives time interval information from the SMF, the time interval information indicates a time interval during which the first network slice is invalid or a time interval during which the second network slice is valid.

12. The method of claim 9, wherein based on there being no network slice associated with the PDU session, the AMF receives a PDU session establishment reject message including a cause value indicating network slice re-mapping failure from the SMF.

13. The method of claim 12, wherein the PDU session establishment reject message further includes information about a time interval during which the network slice is invalid.

14. An AMF operating in a wireless communication system, the AMF comprising:
at least one transceiver;
at least one processor; and
at least one memory operably connected to the at least one processor and configured to store instructions that, when executed, cause the at least one processor to perform a specific operation,
wherein the specific operation:
controls the at least one transceiver to receive a first protocol data unit (PDU) session establishment request based on a first network slice from a terminal,
performs network slice re-mapping related to a PDU session,
controls the at least one transceiver to transmit a first PDU session establishment response to the terminal based on the first PDU session establishment request, the first PDU session establishment response including second network slice related information based on the network slice re-mapping,
controls the at least one transceiver to receive a second PDU session establishment request from the terminal based on the first network slice or the second network slice from the terminal, and
controls the at least one transceiver to transmit a second PDU session establishment response to the terminal based on the second PDU session establishment request.

15. A terminal operation method in wireless communication system, the terminal operation method comprising:
transmitting a first PDU session establishment request based on a first network slice to an AMF;
receiving a first PDU session establishment response from the AMF based on the first PDU session establishment request, the first PDU session establishment response including second network slice related information based on network slice re-mapping;
transmitting a second PDU session establishment request to the AMF based on the first network slice or the second network slice; and
receiving a second PDU session establishment response from the AMF based on the second PDU session establishment request.

16. A terminal operating in a wireless communication system, the terminal comprising:
at least one transceiver;
at least one processor; and
at least one memory operably connected to the at least one processor and configured to store instructions that, when executed, cause the at least one processor to perform a specific operation,
wherein the specific operation:
controls the at least one transceiver to transmit a first PDU session establishment request based on a first network slice to an AMF,
controls the at least one transceiver to receive a first PDU session establishment response from the AMF based on the first PDU session establishment request, the first PDU session establishment response including second network slice related information based on network slice re-mapping;
controls the at least one transceiver to transmit a second PDU session establishment request to the AMF based on the first network slice or the second network slice; and
controls the at least one transceiver to receive a second PDU session establishment response from the AMF based on the second PDU session establishment request.

17. A device comprising at least one memory and at least one processor functionally connected to the at least one memory, wherein the at least one processor controls the device to:
receive a first protocol data unit (PDU) session establishment request based on a first network slice from another device;
perform network slice re-mapping related to a PDU session;
transmit a first PDU session establishment response to another device based on the first PDU session establishment request, the first PDU session establishment response including second network slice related information based on the network slice re-mapping;
receive a second PDU session establishment request from another device based on the first network slice or the second network slice; and
control the at least one transceiver to transmit a second PDU session establishment response to another device based on the second PDU session establishment request.

18. A non-transitory computer-readable medium storing at least one instruction, the non-transitory computer-readable recording medium comprising the at least one instruction executable by a processor,
wherein the at least one instruction controls a device to:
receive a first protocol data unit (PDU) session establishment request based on a first network slice from another device;
perform network slice re-mapping related to a PDU session;
transmit a first PDU session establishment response to another device based on the first PDU session establishment request, the first PDU session establishment response including second network slice related information based on the network slice re-mapping;
receive a second PDU session establishment request from another device based on the first network slice or the second network slice; and
control the at least one transceiver to transmit a second PDU session establishment response to another device based on the second PDU session establishment request.
